# EUROPEAN PATENT APPLICATION

(11) **EP 3 109 877 A1**
(43) Date of publication of application: **28.12.2016**
(21) Application number: 15752230.1
(22) Date of filing: 02.02.2015
(51) Int. Cl.: H01G 11/42, H01G 11/06, H01G 11/84

(54) **CAPACITOR AND METHOD FOR CHARGING AND DISCHARGING SAME**

(30) Priority: 19.02.2014 JP 2014029366
(71) Applicant: Sumitomo Electric Industries, Ltd., Osaka-shi, Osaka 541-0041 (JP)
(72) Inventor: OKUNO, Kazuki, Itami-shi Hyogo 664-0016 (JP); TAKAHASHI, Kenji, Itami-shi Hyogo 664-0016 (JP); TAKEYAMA, Tomoharu, Itami-shi Hyogo 664-0016 (JP); OGAWA, Mitsuyasu, Itami-shi Hyogo 664-0016 (JP); MAJIMA, Masatoshi, Itami-shi Hyogo 664-0016 (JP)
(74) Representative: Boult Wade Tennant
(86) International application number: PCT/JP2015/052812
(87) International publication number: WO 2015/125594

(57) **Abstract**

A capacitor includes a positive electrode, a negative electrode, a separator disposed between the positive electrode and the negative electrode, and an electrolyte. The positive electrode includes a positive electrode current collector and a positive electrode active material held on the positive electrode current collector. The positive electrode active material contains activated carbon. The activated carbon has a carboxyl group, and an amount of desorption of carboxyl group per unit mass of the activated carbon is 0.03 µmol/g or less when the activated carbon is heated with a temperature increase from 300°C to 500°C. The capacitor has an upper-limit voltage Vᵤ for charging and discharging. The upper-limit voltage Vᵤ of a lithium-ion capacitor is 4.2 V or more. The upper-limit voltage Vᵤ of an electric double-layer capacitor is 3.3 V or more.

## Description

### Technical Field

The present invention relates to a capacitor that is charged and discharged at a high upper-limit voltage for charging and a method for charging and discharging the capacitor.

### Background Art

With an increased awareness of environmental issues, systems that convert clean energy such as sunlight or wind power into electric power and store the electrical power as electrical energy have been actively developed. Examples of such known electricity storage devices include lithium ion secondary batteries, electric double-layer capacitors (EDLCs), and lithium-ion capacitors. Recently, capacitors such as EDLCs and lithium-ion capacitors have attracted attention because these capacitors have good instantaneous charge-discharge properties and high-output properties and are easily handled.

A capacitor includes a positive electrode, a negative electrode, and an electrolyte. In an EDLC, a negative electrode including, as a negative electrode active material, a porous carbon material that adsorbs and desorbs cations in an electrolyte is used. In a lithium-ion capacitor, a negative electrode including, as a negative electrode active material, a material that occludes and releases lithium ions in an electrolyte is used. In general, in an EDLC and a lithium-ion capacitor, a polarizable electrode including activated carbon as a positive electrode active material is used as a positive electrode (refer to PTL 1 and PTL 2). Activated carbon exhibits a capacity as a result of a non-Faradaic reaction in which the activated carbon adsorbs and desorbs ions such as anions contained in an electrolyte.

### Citation List

### Patent Literature

PTL 1: Japanese Unexamined Patent Application Publication No. 2013-157603
PTL 2: Japanese Unexamined Patent Application Publication No. 2013-249252

### Summary of Invention

### Technical Problem

In positive electrodes of capacitors, when activated carbon has a high ion adsorption performance (and a high ion desorption performance), a high capacity and/or a high output may be easily ensured. In order to enhance the ion adsorption performance of activated carbon, it is effective to carbonize an organic substance used as a raw material, and to subject the resulting carbide to an activation treatment (such as steam activation or chemical activation). However, as a result of the activation treatment, oxygen-containing functional groups such as a hydroxyl group, a carboxyl group, a carbonyl group, an acid anhydride group, an ether group, and a lactone group are introduced in the activated carbon.

In general, lithium-ion capacitors are charged and discharged in a range of an upper-limit voltage for charging of about 3.8 V, and EDLCs are charged and discharged in a range of an upper-limit voltage for charging of about 2.5 V. In order to realize a capacitor having a high capacity, it is advantageous to increase the upper-limit voltage for charging and discharging. However, when the upper-limit voltage for charging exceeds these voltages and increases to a certain value or more, among oxygen-containing functional groups introduced in activated carbon, in particular, a carboxyl group extremely easily reacts with an electrolyte, the electrolyte is decomposed, and the capacity decreases. This decrease in the capacity becomes significant as a result of repeated charging and discharging of the capacitor, and thus cycle characteristics decrease. An object of the present invention is to provide a capacitor having good cycle characteristics even when the upper-limit voltage for charging and discharging is increased.

### Solution to Problem

An aspect of the present invention relates to a capacitor including a positive electrode, a negative electrode, a separator disposed between the positive electrode and the negative electrode, and an electrolyte, in which the capacitor is a lithium-ion capacitor, the positive electrode includes a positive electrode current collector and a positive electrode active material held on the positive electrode current collector, the positive electrode active material contains activated carbon, the activated carbon has a carboxyl group, and an amount of desorption of carboxyl group per unit mass of the activated carbon is 0.03 mol/g or less when the activated carbon is heated with a temperature increase from 300°C to 500°C, and the capacitor has an upper-limit voltage for charging and discharging of 4.2 V or more.

Another aspect of the present invention relates to a capacitor including a positive electrode, a negative electrode, a separator disposed between the positive electrode and the negative electrode, and an electrolyte, in which the capacitor is an EDLC, the positive electrode includes a positive electrode current collector and a positive electrode active material held on the positive electrode current collector, the positive electrode active material contains activated carbon, the activated carbon has a carboxyl group, and an amount of desorption of carboxyl group per unit mass of the activated carbon is 0.03 µmol/g or less when the activated carbon is heated with a temperature increase from 300°C to 500°C, and the capacitor has an upper-limit voltage for charging and discharging of 3.3 V or more.

Still another aspect of the present invention relates to a method for charging and discharging a capacitor, the capacitor being a lithium-ion capacitor, the positive electrode including a positive electrode current collector and a positive electrode active material held on the positive electrode current collector, the positive electrode active material containing activated carbon, the activated carbon having a carboxyl group, and an amount of desorption of carboxyl group per unit mass of the activated carbon being 0.03 µmol/g or less when the activated carbon is heated with a temperature increase from 300°C to 500°C, the method including a step of charging and discharging the capacitor at an upper-limit voltage of 4.2 V or more.

Another aspect of the present invention relates to a method for charging and discharging a capacitor, the capacitor being an EDLC, the positive electrode including a positive electrode current collector and a positive electrode active material held on the positive electrode current collector, the positive electrode active material containing activated carbon, the activated carbon having a carboxyl group, and an amount of desorption of carboxyl group per unit mass of the activated carbon being 0.03 µmol/g or less when the activated carbon is heated with a temperature increase from 300°C to 500°C, the method including a step of charging and discharging the capacitor at an upper-limit voltage of 3.3 V or more.

### Advantageous Effects of Invention

According to the present invention, in a capacitor in which the upper-limit voltage for charging and discharging is increased, a high capacity retention rate can be obtained even when charging and discharging are repeated. That is, a capacitor having good cycle characteristics can be provided.

### Brief Description of Drawings

[Fig. 1] Figure 1 is a longitudinal sectional view that schematically illustrates a capacitor according to an embodiment of the present invention.
[Fig. 2] Figure 2 is a block diagram that schematically illustrates a charge-discharge system according to an embodiment of the present invention.

### Description of Embodiments

### [Description of embodiments of invention]

First, the contents of embodiments of the present invention will be listed and described.

A first embodiment of the present invention relates to (1) a capacitor including a positive electrode, a negative electrode, a separator disposed between the positive electrode and the negative electrode, and an electrolyte, in which the capacitor is a lithium-ion capacitor, the positive electrode includes a positive electrode current collector and a positive electrode active material held on the positive electrode current collector, the positive electrode active material contains activated carbon, the activated carbon has a carboxyl group, and an amount of desorption of carboxyl group per unit mass of the activated carbon is 0.03 µmol/g or less when the activated carbon is heated with a temperature increase from 300°C to 500°C, and the capacitor has an upper-limit voltage for charging and discharging of 4.2 V or more.

A second embodiment of the present invention relates to (2) a capacitor including a positive electrode, a negative electrode, a separator disposed between the positive electrode and the negative electrode, and an electrolyte, in which the capacitor is an EDLC, the positive electrode includes a positive electrode current collector and a positive electrode active material held on the positive electrode current collector, the positive electrode active material contains activated carbon, the activated carbon has a carboxyl group, and an amount of desorption of carboxyl group per unit mass of the activated carbon is 0.03 µmol/g or less when the activated carbon is heated with a temperature increase from 300°C to 500°C, and the capacitor has an upper-limit voltage for charging and discharging of 3.3 V or more.

Activated carbon used as a positive electrode active material of a lithium-ion capacitor or an EDLC exhibits a capacity by adsorbing and desorbing ions such as anions contained in an electrolyte. From the viewpoint of enhancing the adsorption performance of ions, it is advantageous to use activated carbon that has been subjected to an activation treatment. As a result of the activation treatment, the adsorption performance of ions can be enhanced by controlling the pore size of the activated carbon and/or by increasing the specific surface area. However, as a result of the activation treatment, functional groups such as oxygen-containing groups are introduced in the activated carbon, which may affect the capacitor performance. Examples of the oxygen-containing groups include hydroxyl groups (including a phenolic hydroxyl group), a carboxyl group, a carbonyl group, an acid anhydride group, an ether group, a lactone group, and a quinone group.

From the viewpoint of realizing a capacitor having a high capacity, it is advantageous to increase the upper-limit voltage for charging and discharging. However, the increase in the upper-limit voltage for charging and discharging increases the potential of the positive electrode during charging, which may easily cause side reactions in which oxygen-containing groups contained in the activated carbon are involved. In these side reactions, water and/or gas are generated, and the performance of the capacitor may be impaired. In particular, when the upper-limit voltage for charging and discharging is increased to 4.2 V or more in a lithium-ion capacitor, or 3.3 V or more in an EDLC, an electrolyte is decomposed by a side reaction between the electrolyte and the hydroxyl part of a carboxyl group among oxygen-containing functional groups. As a result, the capacity of the capacitor decreases. This decrease in the capacity becomes significant with the repeating of charging and discharging of the capacitor, and consequently, cycle characteristics decrease. Long-term reliability is also required for capacitors. However, when the upper-limit voltage for charging and discharging is increased to the above voltage or more, the long-term reliability tends to be impaired.

When a decomposition reaction of the electrolyte occurs, gas is generated in the capacitor. The generated gas is located on the surface or in a pore of the electrode and increases the internal resistance of the capacitor. In addition, the presence of the gas makes the charge-discharge reaction non-uniform. Accordingly, the active material is not sufficiently used, which may also decrease the capacity. As a result, cycle characteristics may decrease.

According to the embodiments of the present invention, in a lithium-ion capacitor and an EDLC, a positive electrode active material containing activated carbon having a reduced amount of carboxyl group (that is, activated carbon in which the amount of desorption of carboxyl group per unit mass of the activated carbon is 0.03 µmol/g or less) is used. Therefore, even when the upper-limit voltage for charging and discharging is increased to 4.2 V or more in a lithium-ion capacitor, or 3.3 V or more in an EDLC, a decomposition reaction of an electrolyte, in which a carboxyl group is involved, can be suppressed. Thus, a capacitor having good cycle characteristics can be provided. Since the decomposition reaction of the electrolyte is suppressed, the generation of gas is suppressed. As a result, an increase in the internal resistance can be suppressed.

When activated carbon is heated, carboxyl groups are desorbed from the activated carbon in a temperature range of about 300°C to 500°C to generate carbon dioxide. Consequently, the weight of the activated carbon decreases. Therefore, the amount of carboxyl group desorbed from the activated carbon can be evaluated on the basis of the amount of decrease in the mass (that is, the amount of desorption of carbon dioxide) at this time. When one mole of carboxyl group is desorbed, one mole of water and one mole of carbon dioxide are generated.

The amount (µmol/g) of desorption of carboxyl group can be calculated by heating a predetermined amount (initial mass) of activated carbon (preferably, activated carbon after a dehydration treatment) with a temperature increase from 300°C to 500°C, determining the amount (µmol) of generated carbon dioxide from the amount of decrease in the mass of the activated carbon at this time, and dividing the amount of carbon dioxide by the initial mass (g) of the activated carbon. The amount of carbon dioxide generated from the activated carbon during heating with a temperature increase can be measured by using, for example, a temperature-programmed desorption (TPD) method. In the temperature-programmed desorption method, the desorbed gas can be detected by using, for example, a quadrupole mass spectrometer. The temperature-increasing rate is not particularly limited but may be, for example, 1 to 10 °C/min. The dehydration treatment of activated carbon can be performed by heating the activated carbon at a temperature of, for example, 150°C or less.
(3) The positive electrode current collector preferably has a three-dimensional mesh-like skeleton. The positive electrode including such a positive electrode current collector has a higher void ratio than that in the case where a metal foil current collector is used. Therefore, even if gas is generated in a pore (void) of the positive electrode by, for example, aging in a production process of the capacitor, the gas is easily vented, and the gas can be completely vented during the production. According to embodiments of the present invention, even when the upper-limit voltage for charging and discharging is increased, the generation of gas during charging and discharging can be suppressed. Even if gas is generated during charging and discharging, the gas is easily dispersed in the positive electrode including such a positive electrode current collector, and thus an increase in the internal resistance can be significantly suppressed. This is also advantageous in terms of realizing a capacitor having a high capacity.
(4) In (3) above, the positive electrode preferably has a thickness of 500 to 2,000 µm. When the positive electrode has such a large thickness, voids that occupy the positive electrode have a large volume. Therefore, even if gas is generated, the gas is easily dispersed. Accordingly, an increase in the internal resistance can be further suppressed.
(5) The activated carbon preferably has a specific surface area of 1,200 to 3,500 m²/g. In activated carbon having such a specific surface area, the amount of desorption of oxygen-containing functional group such as a carboxyl group tends to be large. By decreasing the amount of desorption of carboxyl group, activated carbon having such a specific surface area can be used, and thus a high capacity and/or a high output can be easily obtained.
(6) In (1) above, the upper-limit voltage is preferably 4.5 V or more. Even when the upper-limit voltage is such a high value, a decrease in the cycle characteristics can be effectively suppressed because the amount of carboxyl group contained in the activated carbon is decreased.
(7) A third embodiment of the present invention relates to a method for charging and discharging a capacitor, the capacitor being a lithium-ion capacitor, the positive electrode including a positive electrode current collector and a positive electrode active material held on the positive electrode current collector, the positive electrode active material containing activated carbon, the activated carbon having a carboxyl group, and an amount of desorption of carboxyl group per unit mass of the activated carbon being 0.03 µmol/g or less when the activated carbon is heated with a temperature increase from 300°C to 500°C, the method including a step of charging and discharging the capacitor at an upper-limit voltage of 4.2 V or more.
   According to the third embodiment, the decomposition of an electrolyte due to a carboxyl group contained in the activated carbon is suppressed. Accordingly, charging and discharging of the lithium-ion capacitor can be repeatedly performed even at an upper-limit voltage of 4.2 V or more, and a decrease in cycle characteristics can be suppressed.
(8) A fourth embodiment of the present invention relates to a method for charging and discharging a capacitor, the capacitor being an EDLC, the positive electrode including a positive electrode current collector and a positive electrode active material held on the positive electrode current collector, the positive electrode active material containing activated carbon, the activated carbon having a carboxyl group, and an amount of desorption of carboxyl group per unit mass of the activated carbon being 0.03 µmol/g or less when the activated carbon is heated with a temperature increase from 300°C to 500°C, the method including a step of charging and discharging the capacitor at an upper-limit voltage of 3.3 V or more.

According to the fourth embodiment, the decomposition of an electrolyte due to a carboxyl group contained in the activated carbon is suppressed. Accordingly, charging and discharging of the EDLC can be repeatedly performed even at an upper-limit voltage of 3.3 V or more, and a decrease in cycle characteristics can be suppressed.

### [Details of embodiments of invention]

Specific examples of a capacitor according to embodiments of the present invention will be described below with reference to the drawing as required. It is intended that the present invention be not limited to these examples, but be determined by appended claims, and include all variations of the equivalent meanings and ranges to the claims.

### (Capacitor)

The term "capacitor" according to embodiments of the present invention covers a lithium-ion capacitor and an EDLC. Each capacitor includes a positive electrode, a negative electrode, a separator disposed between the positive electrode and the negative electrode, and an electrolyte.

### (Positive electrode)

The positive electrode includes a positive electrode current collector and a positive electrode active material held on the positive electrode current collector. The positive electrode may include a positive electrode mixture containing a positive electrode active material, and a positive electrode current collector on which the positive electrode mixture is held. The positive electrode may be used in common in a lithium-ion capacitor and an EDLC.

The material of the positive electrode current collector is preferably aluminum and/or an aluminum alloy (for example, an aluminum-iron alloy and/or an aluminum-copper alloy). The positive electrode current collector may be a metal foil or a metal porous body (such as a nonwoven fabric formed of a metal fiber or a metal porous sheet). The thickness of the metal foil is, for example, 10 to 50 µm. The thickness of the metal porous body is, for example, 100 to 2,000 µm, and preferably 500 to 2,000 µm.

A metal porous body having a three-dimensional mesh-like metal skeleton (in particular, a hollow skeleton) can also be used as the metal porous body. The metal porous body having a three-dimensional mesh-like skeleton may be formed by coating at least one resin porous body (such as a resin foam and/or a resin nonwoven fabric) having continuous voids with a metal (specifically, the material mentioned as examples above) that forms the current collector by, for example, a plating treatment. A metal porous body having a hollow skeleton can be formed by removing the resin in the skeleton by heat treatment or the like.

After assembly, the capacitor is subjected to aging and/or break-in charging and discharging. Gas generated during this time is vented, thus completing the production of the capacitor. In the case where a metal porous body having a three-dimensional mesh-like skeleton is used, even if gas is generated during the production process of the capacitor, the gas can be completely vented because the void ratio of the positive electrode is higher than that in the case where a metal foil current collector is used. Furthermore, even when gas is generated during charging and discharging, an increase in the internal resistance can be suppressed because the gas is easily dispersed in the positive electrode and is easily vented from the positive electrode. Since a metal porous body has a high void ratio, a large amount of active material can be held on the metal porous body. Thus, the electrostatic capacity of the positive electrode can also be increased.

The void ratio (or the porosity) of the metal porous body having a three-dimensional mesh-like skeleton is, for example, 30% to 99% by volume, preferably 50% to 98% by volume, and still more preferably 80% to 98% by volume or 90% to 98% by volume. The specific surface area (BET specific surface area) of the metal porous body having a three-dimensional mesh-like skeleton is, for example, 100 to 700 cm²/g, preferably 150 to 650 cm²/g, and still more preferably 200 to 600 cm²/g. When the metal porous body has a porosity and/or a specific surface area in the above ranges, the metal porous body easily holds a sufficient amount of an active material and easily ensures a high capacity.

The positive electrode active material contains activated carbon. Activated carbon exhibits a capacity as a result of a non-Faradaic reaction in which the activated carbon adsorbs and desorbs ions (anions and/or cations) contained in the electrolyte. Activated carbon adsorbs and desorbs anions or adsorbs and desorbs cations in accordance with the positive electrode potential.

Activated carbon that has a carboxyl group but has a small amount of desorption of carboxyl group is used. Specifically, activated carbon used has an amount of desorption of carboxyl group per unit mass of the activated carbon of 0.03 µmol/g or less when the activated carbon is heated with a temperature increase from 300°C to 500°C. When activated carbon contains carboxyl groups and the upper-limit voltage for charging and discharging is increased to 4.2 V or more in a lithium-ion capacitor or 3.3 V or more in an EDLC, an electrolyte is decomposed by a side reaction between the electrolyte and the hydroxyl part of a carboxyl group. According to embodiments of the present invention, even when the upper-limit voltage for charging and discharging is increased as described above, the decomposition of an electrolyte can be suppressed by using activated carbon having a small amount of desorption of carboxyl group. During charging and discharging, the consumption of the electrolyte by a side reaction can be suppressed, and thus a decrease in the cycle characteristics can be suppressed.

The amount of desorption of carboxyl group is preferably 0.02 µmol/g or less, and still more preferably 0.01 µmol/g or less. The amount of carboxyl group desorbed from activated carbon is preferably as small as possible. However, it is difficult to control the amount of desorption to zero (it is difficult for activated carbon to contain no carboxyl groups). The amount of desorption of carboxyl group may be, for example, 0.1 nmol/g or more.

The activated carbon can be obtained through a step of reducing an activated carbide. The activated carbide is generally called "activated carbon". Commercially available activated carbon may be used. Alternatively, activated carbon produced in accordance with a known method for producing activated carbon may be used. Any activated carbon is obtained by carbonizing an organic raw material and activating the resulting carbide. Examples of the organic raw material include at least one selected from wood; palm shell; pulp waste liquid; coal or coal pitch obtained by thermal cracking thereof; heavy oil or petroleum pitch obtained by thermal cracking thereof; and phenolic resins. The carbonization can be performed under known conditions.

The activation can be performed by a known activation method such as a gas activation method, a chemical activation method, or a method in which these methods are combined. In the gas activation method, a carbide is activated by bringing the carbide into contact with gas such as steam, carbon dioxide, and/or oxygen under heating. In the chemical activation method, a carbide is activated by heating in a state in which the carbide is brought into contact with a known activation chemical. Examples of the activation chemical include at least one selected from zinc chloride, phosphoric acid, and an alkali (metal hydroxide such as sodium hydroxide). At least one selected from activated carbon activated with steam (also referred to as "steam-activated carbon") and activated carbon activated with an alkali (also referred to as "alkali-activated carbon") is preferably used. The activation can be performed under known conditions.

Alkali-activated carbon has a large specific surface area and thus is advantageous in view of the realization of a high capacity and a high output. However, in activation with an alkali, since an oxygen-containing functional group such as a carboxyl group is easily introduced in a carbide, a side reaction in the capacitor easily occurs. In contrast, although steam-activated carbon has a small specific surface area, the amount of oxygen-containing functional group such as a carboxyl group introduced in steam-activated carbon is small. Therefore, steam-activated carbon is widely used as a positive electrode active material of a capacitor. According to embodiments of the present invention, even when alkali-activated carbon is used, the amount of desorption of carboxyl group can be significantly decreased by further reducing an activated carbide, and a side reaction in which a carboxyl group is involved can be significantly suppressed in the capacitor. Consequently, a large specific surface area of alkali-activated carbon can be effectively used, which is advantageous in view of the realization of a high capacity and/or a high output.

The reduction of the activated carbide can be performed by heating the activated carbide (for example, steam-activated carbon and/or alkali-activated carbon) in a reducing atmosphere. The phrase "in a reducing atmosphere" preferably refers to "in an atmosphere of a reducing gas such as hydrogen gas". For the reduction, only a reducing gas may be used, or a mixture of a reducing gas and at least one inert gas (such as nitrogen gas and/or argon gas) may be used. The content of the reducing gas in the mixture may be appropriately selected from a range of, for example, 1% to 99% by volume, and preferably 1% to 40% by volume or 1% to 10% by volume.

The reduction step may be performed under pressure. However, the reduction step is preferably performed under ordinary pressure (for example, 0.10 ± 0.01 MPa). The heating temperature in the reduction step is, for example, 500°C to 900°C, and preferably 600°C to 800°C. By reducing at this temperature, the amount of desorption of carboxyl group can be significantly decreased. Note that an alkali remains in activated carbon obtained by reducing alkali-activated carbon. The alkali content of such activated carbon is, for example, 20 to 500 ppm on a mass basis.

The specific surface area (BET specific surface area) of the activated carbon is, for example, 800 to 3,500 m²/g, preferably 1,200 to 3,500 m²/g, and still more preferably 1,600 to 3,200 m²/g or 1,800 to 3,000 m²/g. A specific surface area in this range is advantageous from the viewpoint of increasing the electrostatic capacity and/or the output of the capacitor. In addition, when the specific surface area is in this range, the internal resistance can be decreased. An average particle size of the activated carbon is not particularly limited. However, the average particle size of the activated carbon is preferably 20 µm or less, and more preferably 3 to 15 µm. Herein, the term "average particle size" refers to a median diameter D₅₀ on a volume basis in the particle size distribution obtained by a laser diffraction particle size distribution measurement.

The positive electrode active material may contain an active material other than activated carbon, for example, porous carbon having micropores on the order of subnanometers to submicrometers (also referred to as "nanoporous carbon") and/or carbon nanotubes. However, preferably, the positive electrode active material mainly contains activated carbon. The ratio of activated carbon in the positive electrode active material is preferably 80% to 100% by mass, and more preferably 90% to 100% by mass. The positive electrode active material may be formed of activated carbon alone.

The positive electrode can be obtained by, for example, holding a positive electrode active material (or a positive electrode mixture) on a positive electrode current collector. More specifically, a positive electrode current collector is coated or filled with a positive electrode mixture containing at least a positive electrode active material and dried, and, if necessary, the resulting dried product is compressed (or rolled) in the thickness direction. The positive electrode mixture may contain, as an optional component, a conductive assistant and/or a binder. The positive electrode mixture is used in the form of a slurry containing a dispersion medium and components (for example, a positive electrode active material, and a conductive assistant and/or a binder) of the positive electrode mixture. Examples of the dispersion medium include at least one selected from water and organic solvents such as N-methyl-2-pyrrolidone (NMP).

Examples of the conductive assistant include, but are not particularly limited to, carbon black such as acetylene black and Ketjenblack; graphite (such as natural graphite, e.g., flake-like graphite and earthy graphite; and artificial graphite); conductive compounds such as ruthenium oxide; and conductive fibers such as carbon fibers and metal fibers. These conductive assistants may be used alone or in combination of two or more thereof. From the viewpoint of easily ensuring high conductivity and high capacity, the amount of conductive assistant is, for example, 1 to 20 parts by mass, and preferably 5 to 15 parts by mass relative to 100 parts by mass of the positive electrode active material.

Examples of the binder that can be used include, but are not particularly limited to, fluororesins such as polyvinylidene fluoride (PVDF); polyolefin resins; rubber-like polymers such as styrene-butadiene rubber; polyvinylpyrrolidone; polyvinyl alcohol; and cellulose derivatives [for example, cellulose ethers (carboxyalkyl celluloses and salts thereof (such as alkali metal salts and/or ammonium salts) such as carboxymethyl cellulose and a sodium salt thereof)]. These binders may be used alone or in combination of two or more thereof. The amount of binder is not particularly limited. However, from the viewpoint of easily ensuring a high binding property and a high capacity, the amount of binder may be selected from a range of, for example, 0.1 to 15 parts by mass, and is preferably 0.5 to 10 parts by mass relative to 100 parts by mass of the positive electrode active material.

The thickness of the positive electrode may be appropriately selected from a range of, for example, 50 to 2,000 µm. When a metal foil is used as a positive electrode current collector, the thickness of the positive electrode is, for example, 50 to 500 µm or 50 to 300 µm. When a metal porous body having a three-dimensional mesh-like metal skeleton is used as a positive electrode current collector, the thickness of the positive electrode is, for example, 100 to 2,000 µm, and preferably 500 to 2,000 µm.

### (Negative electrode)

The negative electrode includes a negative electrode active material. The negative electrode may include a negative electrode active material and a negative electrode current collector on which the negative electrode active material is held. The material of the negative electrode current collector is preferably, for example, copper, a copper alloy, nickel, a nickel alloy, stainless steel, aluminum, and/or an aluminum alloy. A metal foil may be used as the negative electrode current collector. From the viewpoint of realizing an electricity storage device having a high capacity, a metal porous body may be used as the negative electrode current collector.

The metal porous body is preferably a metal porous body having a three-dimensional mesh-like metal skeleton (in particular, hollow skeleton) the same as that used in the positive electrode current collector. The porosity, the specific surface area, etc. of the metal porous body may be appropriately selected from the ranges described as examples in the metal porous body of the positive electrode current collector. The metal porous body serving as the negative electrode current collector can be prepared in accordance with the case of the positive electrode current collector by using the above material when a resin porous body is coated with a metal.

The negative electrode active material is preferably a material that reversibly holds cations contained in an electrolyte. Examples of such a material include a material that occludes and releases (or intercalates and deintercalates) cations (that is, a material that exhibits a capacity as a result of a Faradaic reaction) and a material that adsorbs and desorbs cations (that is, a material that exhibits a capacity as a result of a non-Faradaic reaction). In a lithium-ion capacitor, a negative electrode active material including a material that exhibits a capacity as a result of a Faradaic reaction is used. In an EDLC, a negative electrode active material including a material that exhibits a capacity as a result of a Faradaic reaction and/or a material that exhibits a capacity as a result of a non-Faradaic reaction is used.

Examples of the negative electrode active material used in a lithium-ion capacitor include a material that occludes and releases (or intercalates and deintercalates) lithium ions contained in an electrolyte. Examples of such a material include carbonaceous materials that occlude and release (or intercalate and deintercalate) lithium ions, lithium titanium oxides [for example, lithium titanium oxide (such as spinel-type lithium titanium oxide such as lithium titanate)], silicon oxides, silicon alloys, tin oxides, and tin alloys. Examples of the carbonaceous materials include graphitizable carbon (soft carbon), non-graphitizable carbon (hard carbon), and carbonaceous materials having a graphite-type crystal structure. These negative electrode active materials may be used alone or in combination of two or more thereof.

The negative electrode active material used in a lithium-ion capacitor preferably has a theoretical capacity of 300 mAh/g or more. Among the negative electrode active materials, carbonaceous materials are preferable. In particular, at least one of a carbonaceous material having a graphite-type crystal structure and hard carbon is preferable. The term "graphite-type crystal structure" refers to a layered crystal structure. Examples of the structure include a cubic crystal structure and a rhombohedral crystal structure. Examples of the carbonaceous materials having a graphite-type crystal structure include at least one selected from natural graphite (such as flake-like graphite), artificial graphite, and graphitized mesocarbon microbeads.

Examples of the negative electrode active material used in an EDLC include activated carbon, the nanoporous carbon described above, and carbon nanotubes. These negative electrode active materials may be used alone or in combination of two or more thereof. Known nanoporous carbon used in capacitors may be used. An example thereof is nanoporous carbon obtained by heating at least one metal carbide such as silicon carbide and/or titanium carbide in an atmosphere containing chlorine gas. The heating temperature may be selected from a range of, for example, 1,000°C to 2,000°C and may be 1,000°C to 1,500°C.

The negative electrode active material used in an EDLC preferably contains activated carbon. Known activated carbon used in capacitors may be used. Examples thereof include at least one selected from carbides of organic raw materials and activated carbon obtained by activating a carbide of an organic material. The above-mentioned activated carbon used as the positive electrode active material may be used as the activated carbon. Examples of the organic materials used as the raw materials of the activated carbon include the organic raw materials cited as examples of the activated carbon of the positive electrode active material. The specific surface area and the average particle size of the activated carbon may be respectively in the above-mentioned ranges for the activated carbon of the positive electrode active material.

The negative electrode can be obtained by holding a negative electrode active material (or a negative electrode mixture) on a negative electrode current collector in accordance with the case of the positive electrode. The negative electrode mixture may contain, as an optional component, a conductive assistant and/or a binder. The negative electrode mixture is used in the form of a slurry containing a dispersion medium and components (for example, a negative electrode active material, and a conductive assistant and/or a binder) of the negative electrode mixture. The dispersion medium, the conductive assistant, and the binder may be appropriately selected from the above examples of the dispersion medium, the conductive assistant, and the binder used in the positive electrode. The amounts of the conductive assistant and the binder relative to 100 parts by mass of the negative electrode active material may be respectively appropriately selected from the ranges of the amounts of the conductive assistant and the binder relative to 100 parts by mass of the positive electrode active material. The thickness of the negative electrode may be appropriately selected from the above examples of the range of the thickness of the positive electrode, and is, for example, 100 to 2,000 µm.

### (Separator)

The separator has ion permeability and is disposed between the positive electrode and the negative electrode to physically separate these electrodes and to prevent a short-circuit. The separator has a porous structure and holds an electrolyte in pores thereof, thereby allowing ions to permeate. Examples of the material of the separator include at least one selected from polyolefins such as polyethylene and polypropylene; polyesters such as polyethylene terephthalate; polyamides; polyimides, cellulose; and glass fibers.

The average pore size of the separator is not particularly limited and is, for example, about 0.01 to 5 µm. The thickness of the separator is not particularly limited and is, for example, about 10 to 100 µm. The porosity of the separator is not particularly limited and is, for example, 40% to 80% by volume, and preferably 50% to 70% by volume.

### (Electrolyte)

The electrolyte contains a cation and an anion. A non-aqueous electrolyte is preferably used as the electrolyte. Electrolytes of capacitors will be described below.

### (Electrolyte of lithium-ion capacitor)

The electrolyte of a lithium-ion capacitor has lithium-ion conductivity. In such an electrolyte, the cation includes at least a lithium ion. Examples of the non-aqueous electrolyte include an electrolyte (organic electrolyte) in which a salt of a lithium ion and an anion (lithium salt) is dissolved in a non-aqueous solvent (or an organic solvent) and an ionic liquid that contains an anion and a cation containing at least a lithium ion.

The organic electrolyte may contain, for example, an ionic liquid and/or an additive in addition to a non-aqueous solvent (organic solvent) and a lithium salt. However, the total of the contents of the non-aqueous solvent and the lithium salt in the electrolyte is, for example, 60% by mass or more, preferably 75% by mass or more, and still more preferably 85% by mass or more. The total of the contents of the non-aqueous solvent and the lithium salt in the electrolyte may be, for example, 100% by mass or less or 95% by mass or less. The lower limit value and the upper limit value may be appropriately combined. The total of the contents of the non-aqueous solvent and the lithium salt in the electrolyte may be, for example, 60% to 100% by mass, or 75% to 95% by mass.

The term "ionic liquid" has the same meaning as a salt in a molten state (molten salt) and refers to a liquid ionic substance formed by an anion and a cation. When an ionic liquid is used as the electrolyte, the electrolyte may contain a non-aqueous solvent and/or an additive in addition to an anion and a cation containing a lithium ion. However, the content of the ionic liquid in the electrolyte is preferably 60% by mass or more, and more preferably 70% by mass or more. The content of the ionic liquid in the electrolyte may be 80% by mass or more, or 90% by mass or more. The content of the ionic liquid in the electrolyte is 100% by mass or less.

From the viewpoint of low-temperature characteristics, etc., an electrolyte containing a non-aqueous solvent (organic solvent) is preferably used. From the viewpoint of suppressing the decomposition of the electrolyte as much as possible, an electrolyte containing an ionic liquid is preferably used, and an electrolyte containing an ionic liquid and a non-aqueous solvent may be used. The concentration of the lithium salt or the lithium ion in the electrolyte may be appropriately selected from a range of, for example, 0.3 to 5 mol/L.

Examples of the anion (first anion) forming the lithium salt include, but are not particularly limited to, anions of fluorine-containing acids (such as fluorine-containing phosphate anions, e.g., a hexafluorophosphate ion (PF₆⁻); and fluorine-containing borate anions, e.g., a tetrafluoroborate ion (BF₄⁻)); anions of chlorine-containing acids (such as a perchlorate ion); anions of an oxygen acid having an oxalate group [such as oxalatoborate ions, e.g., a bis(oxalato)borate ion (B(C₂O₄)₂⁻); and oxalatophosphate ions, e.g., a tris(oxalato)phosphate ion (P(C₂O₄)₃⁻)]; anions of fluoroalkane sulfonic acids [such as a trifluoromethane sulfonic acid ion (CF₃SO₃⁻)]; and bissulfonylamide anions. The lithium salts may be used alone or in combination of two or more lithium salts containing different types of the first anion.

Examples of the bissulfonylamide anions include at least one selected from a bis(fluorosulfonyl)amide anion (FSA⁻), a bis(trifluoromethylsulfonyl)amide anion (TFSA⁻), a (fluorosulfonyl)(perfluoroalkylsulfonyl)amide anion [such as (FSO₂)(CF₃SO₂)N⁻], and a bis(perfluoroalkylsulfonyl)amide anion [such as N(SO₂CF₃)₂ and N(SO₂C₂F₅)₂⁻]. Among these, FSA- is preferable.

The non-aqueous solvent is not particularly limited and may be selected from known non-aqueous solvents used in lithium-ion capacitors. From the viewpoint of ionic conductivity, for example, cyclic carbonates such as ethylene carbonate, propylene carbonate, and butylene carbonate; chain carbonates such as dimethyl carbonate, diethyl carbonate, and ethyl methyl carbonate; and cyclic carbonic esters such as γ-butyrolactone can be preferably used as the non-aqueous solvents. These non-aqueous solvents may be used alone or in combination of two or more thereof.

The ionic liquid contains a molten salt of a cation and an anion (second anion). The ionic liquid may contain one molten salt or two or more molten salts containing different types of cations and/or second anions. A bissulfonylamide anion is preferably used as the second anion. The bissulfonylamide anion may be selected from the bissulfonylamide anions cited as examples of the first anion.

The cation forming the ionic liquid contains at least a lithium ion and may contain a lithium ion (first cation) and a second cation. Examples of the second cation include inorganic cations different from a lithium ion, and organic cations. Examples of the inorganic cations include alkali metal ions other than a lithium ion (such as a sodium ion and a potassium ion), alkaline earth metal ions (a magnesium ion and a calcium ion), and an ammonium ion. The second cation may be an inorganic cation but is preferably an organic cation. The ionic liquid may contain one second cation or two or more second cations in combination.

Examples of the organic cations include nitrogen-containing organic onium cations such as cations derived from an aliphatic amine, an alicyclic amine, or an aromatic amine (such as a quaternary ammonium cation) and cations having a nitrogen-containing heterocycle (i.e., cation derived from cyclic amines); sulfur-containing onium cations; and phosphorus-containing onium cations. Among the nitrogen-containing organic onium cations, a quaternary ammonium cation, and cations having, as the nitrogen-containing heterocyclic skeleton, pyrrolidine, pyridine, or imidazole are particularly preferable.

Specific examples of the nitrogen-containing organic onium cations include tetraalkylammonium cations such as a tetraethylammonium cation (TEA⁺) and a methyltriethylammonium cation (TEMA⁺); a 1-methyl-1-propylpyrrolidinium cation (MPPY⁺); a 1-butyl-1-methylpyrrolidinium cation (MBPY⁺); a 1-ethyl-3-methylimidazolium cation (EMI⁺); and a 1-buthyl-3-methylimidazolium cation (BMI⁺).

### (Electrolyte of EDLC)

The electrolyte used in an EDLC is preferably a non-aqueous electrolyte. Examples of the electrolyte that are preferably used include non-aqueous electrolytes such as an electrolyte in which a salt of a cation (third cation) and an anion (third anion) is dissolved in a non-aqueous solvent (or an organic solvent) and an ionic liquid containing a cation (fourth cation) and an anion (fourth anion).

At least one of an organic cation and an inorganic cation is used as each of the third cation and the fourth cation. Examples of the organic cation and the inorganic cation include those cited as examples of the second cation described above. The third cation and the fourth cation each preferably contain an organic cation. The third cation is preferably at least one quaternary ammonium cation such as TEA⁺ and/or TEMA⁺. The fourth cation is preferably a cation having an imidazole skeleton, such as EMI⁺. The concentration of the third cation or the fourth cation in the electrolyte may be appropriately selected from a range of, for example, 0.3 to 5 mol/L.

The third anion may be appropriately selected from the anions cited as examples of the first anion described above. The non-aqueous solvent may be appropriately selected from the above examples of the non-aqueous solvent used in the electrolyte of a lithium-ion capacitor. The total of the contents of the salt of the third cation and the third anion and the non-aqueous solvent in the electrolyte may be appropriately selected from the ranges of the total of the contents of the non-aqueous solvent and the lithium salt in the electrolyte of a lithium-ion capacitor.

The fourth anion contained in the ionic liquid may be appropriately selected from the anions cited as examples of the second anion described above. The fourth anion preferably contains at least a bissulfonylamide anion. The content of the ionic liquid in the electrolyte may be appropriately selected from the ranges described as examples of the content of the ionic liquid in the electrolyte of a lithium-ion capacitor.

The capacitor according to an embodiment of the present invention can be produced through, for example, (a) a step of forming an electrode group from a positive electrode, a negative electrode, and a separator disposed between the positive electrode and the negative electrode; and (b) a step of placing the electrode group and an electrolyte in a cell case.

The capacitor assembled in a step (c) usually undergoes an activation treatment step (d). In the activation treatment step (d), the capacitor is subjected to an aging treatment (or heat treatment) and/or break-in charging and discharging in order to achieve stable charging and discharging. Gas is generated in the capacitor by performing the aging treatment and/or the break-in charging and discharging. Therefore, a gas-venting treatment is performed in the step (d). In the case where the negative electrode active material is pre-doped with lithium ions in a lithium-ion capacitor, the aging treatment is performed after the pre-doping. The step (d) may include a pre-doping step, an aging treatment step, a break-in charging-discharging step, and/or a gas-venting step. The gas-venting treatment can be performed by discharging the gas generated in the capacitor from, for example, at least one valve (such as a gas vent valve and/or a safety valve described below) provided on a capacitor case to the outside of the capacitor. Herein, the term "pre-doping" means that lithium ions are occluded in the negative electrode in advance before the capacitor is operated.

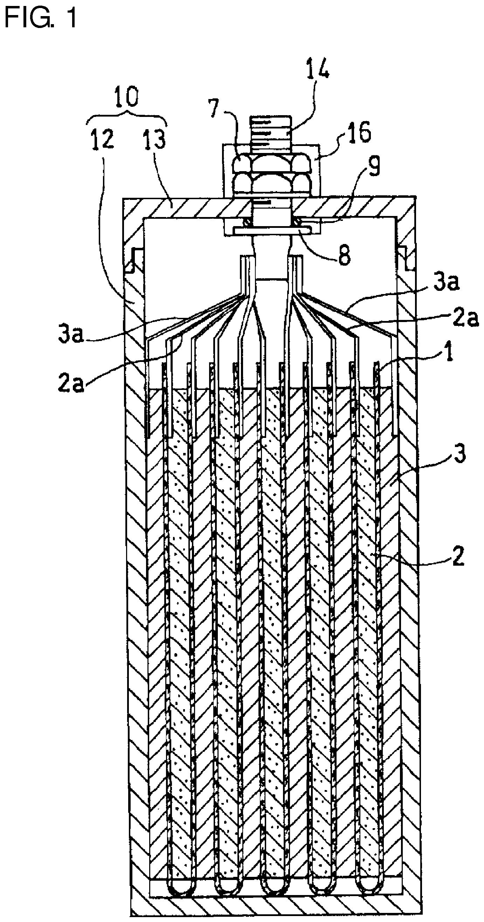

Figure 1 is a longitudinal sectional view that schematically illustrates a capacitor according to an embodiment of the present invention. The capacitor includes a multilayer electrode group, an electrolyte (not shown), and a rectangular aluminum cell case 10 which houses these components. The cell case 10 includes a bottom-closed container body 12 having an opening on the top, and a lid 13 that covers the opening on the top.

The multilayer electrode group is formed by stacking a positive electrode 2 and a negative electrode 3 with a separator 1 therebetween to form a cell, and stacking a plurality of cells. The resulting electrode group is inserted into the container body 12 of the cell case 10. In the subsequent step, an electrolyte is injected into the container body 12 to impregnate gaps between the separators 1, the positive electrodes 2, and the negative electrodes 3 that form the electrode group with the electrolyte.

A safety valve 16 is provided in the center of the lid 13 for the purpose of releasing gas generated inside when the internal pressure of the cell case 10 increases. With the safety valve 16 disposed at the center, an external positive electrode terminal 14 that passes through the lid 13 is provided on the lid 13 at a position close to one side. An external negative electrode terminal that passes through the lid 13 is provided on the lid 13 at a position close to the other side.

The multilayer electrode group includes the plural positive electrodes 2, the plural negative electrodes 3, and the plural separators 1 disposed therebetween, each of which has a rectangular sheet shape. In Fig. 1, the separators 1 are formed like bags so as to enclose the positive electrodes 2. However, the form of the separators is not particularly limited. The positive electrodes 2 and the negative electrodes 3 are alternately arranged in the direction in which the electrodes are stacked within the electrode group.

A positive electrode lead piece 2a may be formed on one end of each of the positive electrodes 2. By bundling the positive electrode lead pieces 2a of the positive electrodes 2 and connecting the resulting bundle to the external positive electrode terminal 14 provided on the lid 13 of the cell case 10, the positive electrodes 2 are connected in parallel. Similarly, a negative electrode lead piece 3a may be formed on one end of each of the negative electrodes 3. By bundling the negative electrode lead pieces 3a of the negative electrodes 3 and connecting the resulting bundle to the external negative electrode terminal provided on the lid 13 of the cell case 10, the negative electrodes 3 are connected in parallel. The bundle of the positive electrode lead pieces 2a and the bundle of the negative electrode lead pieces 3a are desirably arranged on the right and left sides of one end face of the electrode group with a distance therebetween so as not to be in contact with each other.

Each of the external positive electrode terminal 14 and the external negative electrode terminal has the shape of a pillar in which at least a portion exposed to the outside has a thread groove. A nut 7 is engaged with the thread groove of each of the terminals. The nut 7 is rotated so that the nut 7 is secured to the lid 13. A flange 8 is provided on a portion of each of the terminals to be housed in the cell case 10. The flange 8 is secured to the inner surface of the lid 13 with a washer 9 therebetween by the rotation of the nut 7.

The cell case may be formed of a polymer film, an aluminum laminated film, or the like. The cell case may be formed of a metal (that is, a metal can) made of aluminum, an aluminum alloy, iron, stainless steel, or the like. The cell case made of a metal may be optionally subjected to a plating treatment. The shape of the cell case is not particularly limited and may be a tubular shape in which a cross section parallel to the bottom surface of the cell case has a circular shape, an elliptical shape, a rectangular shape, or the like.

The electrode group is not limited to the multilayer type and may be formed by winding a positive electrode and a negative electrode with a separator therebetween. In a lithium-ion capacitor, the negative electrode may be formed so as to have larger dimensions than the positive electrode from the viewpoint of suppressing deposition of metallic lithium on the negative electrode.

With the structure described above, according to the capacitor according to an embodiment of the present invention, even when the upper-limit voltage for charging and discharging is increased, charging and discharging can be repeatedly performed, and a decrease in cycle characteristics can be suppressed. Since the upper-limit voltage for charging and discharging can be increased, the capacity of an active material can be effectively used, and a capacitor having a high capacity can also be realized.

A method for charging and discharging a capacitor according to an embodiment of the present invention includes a step of charging and discharging a capacitor at an upper-limit voltage Vᵤ. The upper-limit voltage Vᵤ of a lithium-ion capacitor is 4.2 V or more, preferably 4.3 V or more, and more preferably 4.4 V or more or 4.5 V or more. The upper-limit voltage may be more than 5 V but is preferably 5 V or less. The lower limit value and the upper limit value may be appropriately combined. The upper-limit voltage for charging and discharging a lithium-ion capacitor may be, for example, 4.2 to 5 V, 4.3 to 5 V, or 4.5 to 5 V. The upper-limit voltage Vᵤ of an EDLC is 3.3 V or more, preferably 3.4 V or more, and more preferably 3.5 V or more. The upper-limit voltage Vᵤ is preferably 4 V or less.

Note that the upper-limit voltage for charging and discharging a capacitor cannot be freely determined by the user or the like but is a characteristic of a capacitor determined at the time of design of the capacitor in accordance with components of the capacitor. Charging and discharging of a capacitor are usually performed in a voltage range that is determined in advance. Specifically, a capacitor is charged up to a predetermined upper-limit voltage and discharged down to a predetermined termination voltage. Charging and discharging are usually carried out by a charge control unit and a discharge control unit in a charge-discharge system including a capacitor. An embodiment of the present invention also includes a charge-discharge system including a capacitor, a charge control unit that controls charging of the capacitor, and a discharge control unit that controls discharging of the capacitor. The discharge control unit may include a load apparatus that consumes electric power supplied from the capacitor.

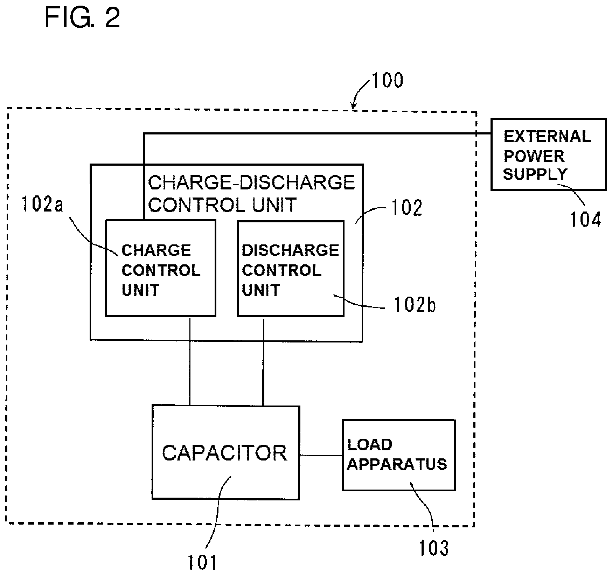

Figure 2 is a block diagram that schematically illustrates a charge-discharge system according to an embodiment of the present invention. A charge-discharge system 100 includes a capacitor 101, a charge-discharge control unit 102 that controls charging and discharging the capacitor 101, and a load apparatus 103 that consumes electric power supplied from the capacitor 101. The charge-discharge control unit 102 includes a charge control unit 102a that controls a current and/or a voltage, etc. during charging of the capacitor 101 and a discharge control unit 102b that controls a current and/or a voltage, etc. during discharging of the capacitor 101. The charge control unit 102a is connected to an external power supply 104 and the capacitor 101. The discharge control unit 102b is connected to the capacitor 101. The capacitor 101 is connected to the load apparatus 103.

### [Appendixes]

Regarding the embodiments described above, the following Appendixes will be further disclosed.

### (Appendix 1)

A capacitor including a positive electrode, a negative electrode, a separator disposed between the positive electrode and the negative electrode, and an electrolyte, in which the capacitor is a lithium-ion capacitor, the positive electrode includes a positive electrode current collector and a positive electrode active material held on the positive electrode current collector, the positive electrode active material contains activated carbon, the activated carbon has a carboxyl group, and an amount of desorption of carboxyl group per unit mass of the activated carbon is 0.03 µmol/g or less when the activated carbon is heated with a temperature increase from 300°C to 500°C, and the capacitor has an upper-limit voltage for charging and discharging of 4.2 V or more.

### (Appendix 2)

A capacitor including a positive electrode, a negative electrode, a separator disposed between the positive electrode and the negative electrode, and an electrolyte, in which the capacitor is an EDLC, the positive electrode includes a positive electrode current collector and a positive electrode active material held on the positive electrode current collector, the positive electrode active material contains activated carbon, the activated carbon has a carboxyl group, and an amount of desorption of carboxyl group per unit mass of the activated carbon is 0.03 µmol/g or less when the activated carbon is heated with a temperature increase from 300°C to 500°C, and the capacitor has an upper-limit voltage for charging and discharging of 3.3 V or more.

According to the capacitors of Appendix 1 and Appendix 2, even when the upper-limit voltage for charging and discharging is increased to 4.2 V or more in a lithium-ion capacitor and 3.3 V or more in an EDLC, a decomposition reaction of the electrolyte, in which a carboxyl group is involved, can be suppressed. As a result, capacitors having good cycle characteristics can be obtained.

### (Appendix 3)

In the capacitor of Appendix 1 or Appendix 2, preferably, the positive electrode current collector has a three-dimensional mesh-like skeleton, the positive electrode has a thickness of 500 to 2,000 µm, the activated carbon has a specific surface area of 1,600 to 3,200 m²/g, the activated carbon contains an alkali, and the content of the alkali in the activated carbon is 20 to 500 ppm.

In this capacitor, an increase in the internal resistance is suppressed, and cycle characteristics can be further enhanced. Furthermore, this capacitor is advantageous from the viewpoint of realizing a high capacity and/or a high output.

### (Appendix 4)

A charge-discharge system including the capacitor of Appendix 1 or Appendix 2, a charge control unit that controls charging of the capacitor, and a discharge control unit that controls discharging of the capacitor.

In this charge-discharge system, even when the upper-limit voltage for charging and discharging a capacitor is increased to 4.2 V or more in a lithium-ion capacitor and 3.3 V or more in an EDLC, a decomposition reaction of an electrolyte, in which a carboxyl group is involved, can be suppressed. As a result, cycle characteristics of the capacitor can be improved.

### EXAMPLES

The present invention will now be specifically described using Examples and Comparative Examples. However, the present invention is not limited to the Examples described below.

### EXAMPLE 1

An EDLC was prepared by the procedure described below.

### (1) Preparation of electrodes

### (a) Preparation of current collector

A thermosetting polyurethane foam (porosity: 95% by volume, number of pores (cells) with respect to surface length of 1 inch (= 2.54 cm): about 50, 100 mm in length x 30 mm in width x 1.1 mm in thickness) was prepared. The foam was immersed in a conductive suspension containing graphite, carbon black (average particle diameter D₅₀: 0.5 µm), a resin binder, a penetrant, and an antifoamer, and then dried to form a conductive layer on a surface of the foam. The content of the graphite and the carbon black in the suspension was 25% by mass in total.

The foam having the conductive layer on the surface thereof was immersed in a molten-salt aluminum plating bath. A direct current with a current density of 3.6 A/dm² was applied to the foam for 90 minutes to form an aluminum layer. The mass of the aluminum layer per apparent area of the foam was 150 g/m². The molten-salt aluminum plating bath contained 33% by mole of 1-ethyl-3-methylimidazolium chloride and 67% by mole of aluminum chloride. The temperature of the molten-salt aluminum plating bath was 40°C.

The foam having the aluminum layer on the surface thereof was immersed in a lithium chloride-potassium chloride eutectic molten salt at 500°C. A negative potential of -1 V was applied to the foam for 30 minutes to decompose the foam. The resulting aluminum porous body was taken out from the molten salt, cooled, washed with water, and dried to obtain a current collector. The resulting current collector had a three-dimensional mesh-like porous structure which conformed to the shape of the pores of the foam and in which the pores were interconnected to each other. The current collector had a porosity of 94% by volume, an average pore diameter of 550 µm, a specific surface area (BET specific surface area) measured by a BET method of 350 cm²/g, and a thickness of 1,100 µm. The three-dimensional mesh-like aluminum skeleton had, in the inner part thereof, a cavity including interconnected pores and formed by the removal of the foam.

### (b) Preparation of positive electrode and negative electrode

### (b-1) Preparation of active material

A commercially available alkali-activated carbon (specific surface area: 2,300 m²/g, average particle size: about 5 µm) was reduced by heating in a reducing gas atmosphere (pressure: about 0.1 MPa) containing 5% by volume of hydrogen gas and 95% by volume of argon. The heating was performed by increasing the temperature from room temperature to 700°C over a period of one hour, and subsequently holding the temperature at 700°C for one hour. The resulting reduced product was used as an active material. After the heating, the reduced product (activated carbon) was cooled to room temperature, and the cooled product was used as an active material for the preparation of an electrode mixture slurry.

The alkali content of the resulting reduced product (activated carbon) determined by inductively-coupled plasma analysis was 300 ppm. About 15 g of the reduced product (activated carbon) was held at 150°C for one hour to remove water. The mass (initial mass) mᵢ (g) at this time was measured. Subsequently, the temperature was increased from 150°C to 950°C at a rate of 5°C/min. The amount (µmol) of carbon dioxide generated in a range of 300°C to 500°C was determined from the amount of decrease in the mass of the activated carbon in this temperature range. The amount of desorption of carboxyl group in the activated carbon was determined by dividing this amount of carbon dioxide by the mass mᵢ. According to the result, the amount of desorption of carboxyl group was 0.02 µmol/g.

### (b-2) Preparation of positive electrode and negative electrode

The active material obtained in (b-1) above, acetylene black serving as a conductive assistant, and an NMP solution of PVDF (binder) (PVDF concentration: 2.3% by mass) were mixed using a mixer under stirring to prepare an electrode mixture slurry. The mass ratio of the active material, acetylene black, and PVDF was 100:10.7:5.7. The current collector obtained in the step (a) above was filled with the resulting electrode mixture slurry, and drying was performed at 100°C for 30 minutes. The resulting dried product was compressed in the thickness direction with a pair of rolls to prepare an electrode.

### (2) Preparation of EDLC

The electrode prepared in (1) above was cut into two pieces each having a size of 1.5 cm x 1.5 cm. The two pieces of the electrode were used as a positive electrode and a negative electrode. An aluminum lead was welded on one surface of each of the positive electrode and the negative electrode. A separator (thickness: 60 µm) formed of cellulose was disposed between the positive electrode and the negative electrode. The positive electrode and the negative electrode were stacked to form a single-cell electrode group. The electrode group was placed in a cell case formed of an aluminum laminated sheet.

Subsequently, an electrolyte was injected into the cell case to impregnate the positive electrode, the negative electrode, and the separator with the electrolyte. A polycarbonate solution containing TEMABF₄ in a concentration of 1 mol/L was used as the electrolyte. Lastly, the cell case was sealed while reducing the pressure with a vacuum sealer. Subsequently, break-in charging and discharging were performed by repeating a charge-discharge cycle 20 times, the charge-discharge cycle including charging at a current of 20 mA/cm² up to an upper-limit voltage of 3.3 V, and discharging at a current of 20 mA/cm² down to a voltage of 0.1 V. Subsequently, an end of the sealed cell case was opened to discharge gas generated in the cell to the outside of the cell. After the gas was discharged, the opened portion was sealed again. An EDLC (A1) was prepared in this manner. The design capacity of the EDLC (A1) was about 2.2 mAh/cm² at the time of 3.3 V-charging.

### (3) Evaluations

The evaluations below were performed using the prepared EDLC.

### (a) Cycle characteristics

The EDLC was charged at a current of 20 mA/cm² up to an upper-limit voltage Vᵤ, and discharged at a current of 20 mA/cm² until the voltage became 0.1 V. The discharge capacity (initial capacity) at this time was determined. The above cycle of charging and discharging was repeated 5,000 times in total, and the discharge capacity the 5000th time was determined. A ratio (%) when the initial capacity was assumed to be 100% was calculated. Cycle characteristics were evaluated in the cases where the upper-limit voltages Vᵤ were 3.3 V and 2.5 V.

### (b) Internal resistance

An internal resistance of the EDLC after the cycle characteristics were evaluated in (a) above was measured by an alternating current impedance method at a frequency of an AC current of 1 kHz.

### COMPARATIVE EXAMPLE 1

An electrode mixture slurry was prepared as in Example 1 except that the alkali-activated carbon used as a raw material of the active material in Example 1 was used as an active material without further treatment. An EDLC (B1) was assembled and evaluated as in Example 1 except that the electrode mixture slurry prepared above was used. The amount of desorption of carboxyl group in the alkali-activated carbon was determined as in Example 1. According to the result, the amount of desorption was 7 µmol/g.

### EXAMPLE 2

An electrode mixture slurry the same as that used in Example 1 was applied onto one surface of an aluminum foil (thickness: 20 µm) serving as a current collector and dried at 100°C for 30 minutes. The dried product was compressed in a thickness direction with a pair of rolls to prepare an electrode. The electrode prepared in this manner was cut into two pieces each having a size of 1.5 cm x 1.5 cm. The two pieces of the electrode were used as a positive electrode and a negative electrode. An aluminum lead was welded on the other surface of each of the positive electrode and the negative electrode. An EDLC (A2) was prepared as in (2) of Example 1 except that the positive electrode and the negative electrode prepared above were used and stacked in a state where the one surface of the positive electrode and the one surface of the negative electrode face each other. The design capacity of the EDLC (A2) was about 0.4 mAh/cm² at the time of 3.3 V-charging. Table 1 shows the results of the evaluations of (3) above in Example 1 using the EDLCs of Examples 1 and 2 and Comparative Example 1.

**[Table 1]**

| | Cycle characteristics (%) | | Internal resistance (Ω) | |
|---|---|---|---|---|
| Vᵤ | 2.5 V | 3.3 V | 2.5 V | 3.3 V |
| A1 | 92 | 90 | 1.02 | 1.12 |
| B1 | 81 | 2 | 1.05 | 34.2 |
| A2 | 93 | 91 | 0.91 | 1.05 |

As shown in Table 1, when the upper-limit voltage was 2.5 V, significant differences in internal resistance and cycle characteristics were not observed between A1 and A2, and B1. However, when the upper-limit voltage was 3.3 V, in B1, the internal resistance significantly increased and the cycle characteristics significantly degraded. In contrast, in A1 andA2, even when the upper-limit voltage was 3.3 V, high cycle characteristics were obtained and the internal resistance was also low.

### EXAMPLE 3

### (1) Preparation of negative electrode

### (a) Preparation of negative electrode current collector

A copper (Cu) coating film (conductive layer) having a coating weight per unit area of 5 g/cm² was formed by sputtering on a surface of a thermosetting polyurethane foam the same as that used in (1) (a) in Example 1. The foam having the conductive layer on the surface thereof was immersed as a workpiece in a copper sulfate plating bath. A direct current at a cathode current density of 2 A/dm² was applied to the workpiece to form a Cu layer on the surface of the foam. The copper sulfate plating bath contained 250 g/L of copper sulfate, 50 g/L of sulfuric acid, and 30 g/L of copper chloride. The temperature of the copper sulfate plating bath was 30°C.

The foam having the Cu layer on the surface thereof was heat-treated at 700°C in an air atmosphere to decompose the foam. Subsequently, baking was performed in a hydrogen atmosphere to reduce an oxide film formed on the surface. Thus, a copper porous body (negative electrode current collector) was obtained. The resulting negative electrode current collector had a three-dimensional mesh-like porous structure which conformed to the shape of the pores of the foam and in which the pores were interconnected to each other. The negative electrode current collector had a porosity of 92% by volume, an average pore diameter of 550 µm, and a BET specific surface area of 200 cm²/g. The three-dimensional mesh-like copper skeleton had, in the inner part thereof, a cavity including interconnected pores and formed by the removal of the foam.

### (b) Preparation of negative electrode

An artificial graphite powder serving as a negative electrode active material, acetylene black serving as a conductive assistant, PVDF serving as a binder, and NMP serving as a dispersion medium were mixed to prepare a negative electrode mixture slurry. The mass ratio of the graphite powder, acetylene black, and PVDF was 100:5:5. The current collector obtained in the step (a) above was filled with the resulting negative electrode mixture slurry, and drying was performed at 100°C for 30 minutes. The resulting dried product was rolled with a pair of rolls to prepare a negative electrode having a thickness of 210 µm. In the step (1), the amount of filling of the negative electrode mixture was adjusted such that the capacity that can be charged in the negative electrode after being pre-doped with lithium was about double the capacity of a positive electrode.

### (2) Preparation of lithium electrode

A lithium foil (thickness: 50µm) was pressure-bonded on one surface of a punched copper foil (thickness: 20 µm, opening diameter: 50 µm, opening ratio: 50%, 2 cm x 2 cm) serving as a current collector to prepare a lithium electrode. A nickel lead was welded on the other surface of the current collector of the lithium electrode.

### (3) Preparation of lithium-ion capacitor

An electrode the same as that prepared in Example 1 was used as the positive electrode. This positive electrode and the negative electrode obtained in (1) above were each cut to have a size of 1.5 cm x 1.5 cm. An aluminum lead was welded on one surface of the positive electrode. A nickel lead was welded on one surface of the negative electrode.

In a state where the other surface of the positive electrode and the other surface of the negative electrode face each other, a cellulose separator (thickness: 60 µm) was disposed between the positive electrode and the negative electrode. The positive electrode and the negative electrode were stacked to form a single-cell electrode group. Furthermore, the lithium electrode was disposed on the negative electrode side of the electrode group with a polyolefin separator (a laminate of a polyethylene microporous film and a polypropylene microporous film) therebetween. The resulting laminate was placed in a cell case formed of an aluminum laminated sheet.

Subsequently, an electrolyte was injected into the cell case to impregnate the positive electrode, the negative electrode, and the separators with the electrolyte. The electrolyte used was a solution prepared by dissolving LiPF₆ as a lithium salt in a mixed solvent containing ethylene carbonate and diethyl carbonate in a volume ratio of 1:1 so that the concentration of LiPF₆ was 1.0 mol/L. Lastly, the cell case was sealed while reducing the pressure with a vacuum sealer.

The lead wire of the negative electrode and the lead wire of the lithium electrode were connected to a power supply on the outside of the cell case. The cell in this state was allowed to stand for a predetermined time in a thermostatic chamber at 30°C so that the temperature of the electrolyte became the same as the temperature of the thermostatic chamber. Subsequently, charging was performed between the negative electrode and the lithium electrode at a current of 1.5 mA/cm² up to a potential of 0 V with respect to metallic lithium. Discharging of 3.0 mAh was then performed at a current of 1.5 mA/cm² to pre-dope the negative electrode active material with lithium. After the pre-doping, break-in charging and discharging were performed by repeating a charge-discharge cycle 20 times, the charge-discharge cycle including charging the cell at a current of 1.5 mA/cm² up to an upper-limit voltage of 4.2 V, and discharging the cell at a current of 1.5 mA/cm² down to a voltage of 2.2 V. Subsequently, an end of the sealed cell case was opened to discharge gas generated in the cell to the outside of the cell. After the gas was discharged, the opened portion was sealed again. A lithium-ion capacitor (A3) was prepared in this manner. The design capacity of the lithium-ion capacitor (A3) was about 1.5 mAh/cm² at the time of 4.5 V-charging.

### (4) Evaluations

Cycle characteristics and an internal resistance were evaluated using the prepared lithium-ion capacitor as in the evaluations in (3) of Example 1 except that the upper-limit voltage Vᵤ was changed to 4.2 V, 4.5 V, or 3.8 V.

### (a) Cycle characteristics

The lithium-ion capacitor was charged at a current of 5 mA/cm² up to an upper-limit voltage Vᵤ, and discharged at a current of 5 mA/cm² until the voltage became 2.3 V. The discharge capacity (initial capacity) at this time was determined. The above cycle of charging and discharging was repeated 2,000 times in total, and the discharge capacity the 2000th time was determined. A ratio (%) when the initial capacity was assumed to be 100% was calculated. Cycle characteristics were evaluated in the cases where the upper-limit voltages Vᵤ were 4.5 V, 4.2 V, and 3.8 V.

### (b) Internal resistance

An internal resistance of the lithium-ion capacitor after the cycle characteristics were evaluated in (a) above was measured by an alternating current impedance method at a frequency of an AC current of 1 kHz.

### COMPARATIVE EXAMPLE 2

A lithium-ion capacitor (B2) was prepared and evaluated as in Example 3 except that an electrode the same as that used in Comparative Example 1 was used as the positive electrode.

### EXAMPLE 4

A negative electrode mixture slurry the same as that used in Example 3 was applied onto one surface of a copper foil (thickness: 15 µm) and dried at 100°C for 30 minutes. The dried product was compressed in a thickness direction with a pair of rolls to prepare a negative electrode. The negative electrode prepared in this manner was cut to have a size of 1.5 cm x 1.5 cm. A nickel lead was welded on the other surface, and the resulting electrode was used as the negative electrode.

A lithium-ion capacitor (A4) was prepared as in (3) of Example 3 except that the negative electrode prepared in this manner was used as the negative electrode and a positive electrode the same as that used in Example 2 was used as the positive electrode. The design capacity of the lithium-ion capacitor (A4) was about 0.24 mAh/cm² at the time of 4.5 V-charging.

Table 2 shows the results of the evaluations of (4) above in Example 3 using the lithium-ion capacitors of Examples 3 and 4 and Comparative Example 2.

**[Table 2]**

| | Cycle characteristics (%) | | | Internal resistance (Ω/cm²) | | |
|---|---|---|---|---|---|---|
| Vᵤ | 3.8 V | 4.2 V | 4.5 V | 3.8 V | 4.2 V | 4.5 V |
| A3 | 97 | 96 | 95 | 2.25 | 2.70 | 2.97 |
| B2 | 91 | 78 | 1 | 2.31 | 3.00 | 36.0 |
| A4 | 98 | 97 | 98 | 1.37 | 1.51 | 1.66 |

As shown in Table 2, when the upper-limit voltage was 3.8 V, significant differences in internal resistance and cycle characteristics were not observed between A3 and A4, and B2. However, when the upper-limit voltage was 4.2 V, in B2, the internal resistance increased and the cycle characteristics significantly decreased. In contrast, in A3 and A4, even when the upper-limit voltage was 4.2 V, the cycle characteristics were high and the internal resistance was low. When the upper-limit voltage was 4.5 V, the differences in cycle characteristics and internal resistance between A3 and A4, and B2 became more significant, and high cycle characteristics could be ensured in A3 and A4.

### Industrial Applicability

According to the capacitor according to an embodiment of the present invention, good cycle characteristics can be obtained while the upper-limit voltage for charging and discharging is high. Therefore, the capacitor can be used in various applications in which a high capacity and high cycle characteristics are required.

### Reference Signs List

1: separator, 2: positive electrode, 2a: positive electrode lead piece, 3: negative electrode, 3a: negative electrode lead piece, 7: nut, 8: flange, 9: washer, 10: cell case, 12: container body, 13: lid, 14: external electrode terminal, 16: safety valve, 100: charge-discharge system, 101: capacitor, 102: charge-discharge control unit, 102a: charge control unit, 102b: discharge control unit, 103: load apparatus

## Claims

1. A capacitor comprising a positive electrode, a negative electrode, a separator disposed between the positive electrode and the negative electrode, and an electrolyte,
wherein the capacitor is a lithium-ion capacitor,
the positive electrode includes a positive electrode current collector and a positive electrode active material held on the positive electrode current collector,
the positive electrode active material contains activated carbon,
the activated carbon has a carboxyl group, and an amount of desorption of carboxyl group per unit mass of the activated carbon is 0.03 µmol/g or less when the activated carbon is heated with a temperature increase from 300°C to 500°C, and
the capacitor has an upper-limit voltage for charging and discharging of 4.2 V or more.

2. A capacitor comprising a positive electrode, a negative electrode, a separator disposed between the positive electrode and the negative electrode, and an electrolyte,
wherein the capacitor is an electric double-layer capacitor,
the positive electrode includes a positive electrode current collector and a positive electrode active material held on the positive electrode current collector,
the positive electrode active material contains activated carbon,
the activated carbon has a carboxyl group, and an amount of desorption of carboxyl group per unit mass of the activated carbon is 0.03 µmol/g or less when the activated carbon is heated with a temperature increase from 300°C to 500°C, and
the capacitor has an upper-limit voltage for charging and discharging of 3.3 V or more.

3. The capacitor according to Claim 1 or 2, wherein the positive electrode current collector has a three-dimensional mesh-like skeleton.

4. The capacitor according to Claim 3, wherein the positive electrode has a thickness of 500 to 2,000 µm.

5. The capacitor according to any one of Claims 1 to 4, wherein the activated carbon has a specific surface area of 1,200 to 3,500 m²/g.

6. The capacitor according to Claim 1, wherein the upper-limit voltage is 4.5 V or more.

7. A method for charging and discharging a capacitor,
the capacitor being a lithium-ion capacitor,
the positive electrode including a positive electrode current collector and a positive electrode active material held on the positive electrode current collector,
the positive electrode active material containing activated carbon,
the activated carbon having a carboxyl group, and an amount of desorption of carboxyl group per unit mass of the activated carbon being 0.03 µmol/g or less when the activated carbon is heated with a temperature increase from 300°C to 500°C,
the method comprising a step of charging and discharging the capacitor at an upper-limit voltage of 4.2 V or more.

8. A method for charging and discharging a capacitor,
the capacitor being an electric double-layer capacitor,
the positive electrode including a positive electrode current collector and a positive electrode active material held on the positive electrode current collector,
the positive electrode active material containing activated carbon,
the activated carbon having a carboxyl group, and an amount of desorption of carboxyl group per unit mass of the activated carbon being 0.03 µmol/g or less when the activated carbon is heated with a temperature increase from 300°C to 500°C,
the method comprising a step of charging and discharging the capacitor at an upper-limit voltage of 3.3 V or more.
